# FASCICULE DE BREVET EUROPEEN

(11) **EP 2 734 433 B1**
(45) Date de publication et mention de la délivrance du brevet: **16.12.2015**
(21) Numéro de dépôt: 12743479.3
(22) Date de dépôt: 29.06.2012
(51) Int. Cl.: B62D 65/02

(54) **SYSTEME ET PROCEDE DE MISE EN GEOMETRIE D'UN SOUS-ENSEMBLE MECANIQUE**
SYSTEM UND VERFAHREN ZUR GEOMETRISCHEN POSITIONIERUNG EINER MECHANISCHEN BAUGRUPPE
SYSTEM AND METHOD OF GEOMETRIC POSITIONING OF A MECHANICAL SUB-ASSEMBLY

(30) Priorité: 20.07.2011 FR 1156560
(43) Date de publication de la demande: 28.05.2014
(73) Titulaire: Renault S.A.S., 92100 Boulogne-Billancourt (FR)
(72) Inventeur: EXBRAYAT, Julien, F-94150 Rungis (FR); DESMARD, Frederic, F-91300 Massy (FR); LEMARINEL, Véronique, F-78140 Vélizy (FR)
(86) Numéro de dépôt international: PCT/FR2012/051504
(87) Numéro de publication internationale: WO 2013/011220

(56) Documents cités:
- US-A- 4 751 995
- US-A- 4 779 336
- US-A1- 2010 154 193

## Description

### Domaine technique de l'invention

L'invention concerne le domaine de la mise en géométrie d'un sous-ensemble mécanique pour un véhicule automobile, en particulier d'un élément de soubassement de caisse de véhicule automobile. Des pièces constitutives du sous-ensemble comportent des points de référence et des pilotes de positionnement sont destinés chacun à mettre en référence géométrique un point de référence correspondant.

L'invention a pour objet plus particulièrement un système et un procédé de mise en géométrie d'un tel sous-ensemble mécanique, ainsi qu'une platine d'assemblage d'un tel sous-ensemble mécanique.

### État de la technique

Pour le montage de sous-ensembles mécaniques sous la caisse d'un véhicule automobile, en particulier d'un élément de soubassement de caisse de véhicule automobile, il est connu d'assembler au préalable ces sous-ensemble sur une platine d'assemblage, puis de les transporter par exemple à l'aide d'une palette jusqu'à pouvoir les monter sur la caisse du véhicule.

Que ce soit pour accomplir l'opération d'assemblage du sous-ensemble mécanique, ou ensuite son transport ou son montage, il est nécessaire de réaliser une mise en géométrie précise du sous-ensemble. En particulier dans le cas de l'assemblage du sous-ensemble, les différentes pièces du sous-ensembles doivent être positionnées relativement les unes aux autres de manière précise et maintenue au cours de l'assemblage de ces pièces les unes avec les autres, par exemple par soudage dans le cas d'un élément de soubassement.

De façon connue, dans une ligne de fabrication de caisses de véhicules automobiles, les pièces constitutives des éléments de soubassement comportent plusieurs points ou trous de référence dont la position géométrique doit être bien définie pour que les différentes pièces puissent être soudées les unes aux autres avec une grande précision.

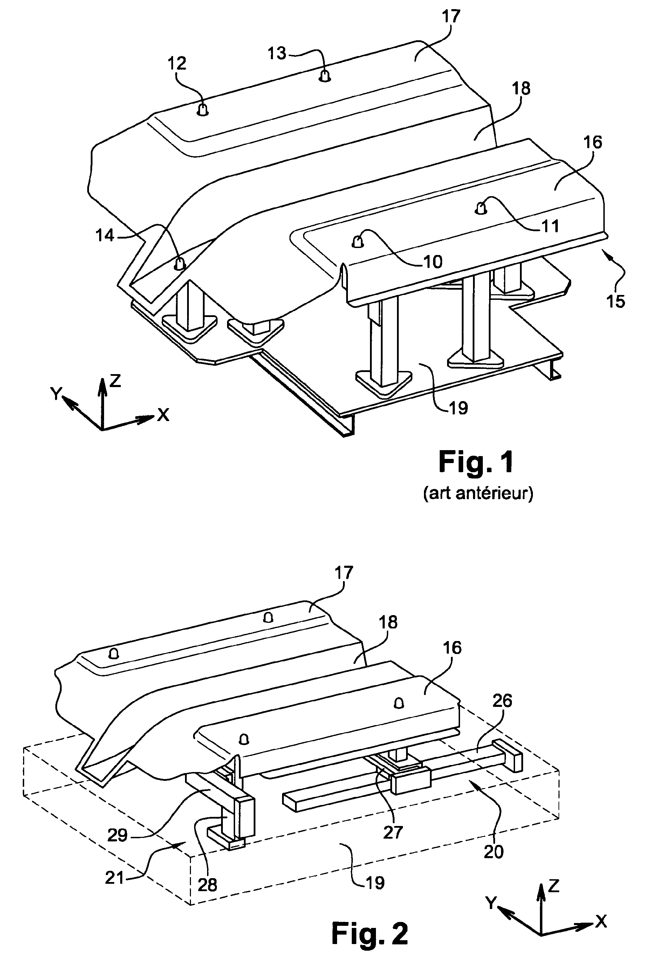

La mise en géométrie de ces éléments est par exemple réalisée à l'aide d'un système illustré sur la figure 1, comprenant des pilotes de positionnement 10 à 15 destinés chacun à mettre en référence géométrique un trou de référence correspondant ménagé dans trois pièces (respectivement un demi-plancher droit 16, un demi-plancher gauche 17 et un tunnel 18) d'un exemple d'élément de soubassement (ici soubassement central). De manière connue, les pilotes sont tous fixes par rapport à un châssis 19 du système.

La mise en géométrie devient donc compliquée lorsque l'on veut assembler sur une même ligne de fabrication des caisses différentes. En effet, dans ce cas, la position des trous de référence précités varie d'une caisse à l'autre, par exemple de l'ordre de plusieurs centaines de millimètres suivant la direction X de la longueur de la caisse, suivant la direction Y de la largeur et suivant la direction Z de la hauteur.

Il est donc nécessaire à chaque changement de caisse de procéder à une configuration de la mise en géométrie des éléments de soubassement, en adaptant, en fonction du type de caisse et donc du type d'élément de soubassement, la position des pilotes de positionnement en fonction de la position attendue des trous de référence. Cette problématique se pose quel que soit le type de sous-ensemble et quelle que soit l'opération pour laquelle la mise en géométrie est requise.

Pour accomplir cette configuration, avec un système tel qu'illustré sur la figure 1, il est nécessaire de changer de système à chaque changement de caisse. Pour s'affranchir de cette obligation, il est connu de rendre l'installation capacitaire et flexible en prévoyant une modification de palettes de géométrie chacune associée à une caisse donnée, ou bien en prévoyant de pouvoir déplacer chacun des pilotes de positionnement suivant les trois axes X, Y, Z définis plus haut pour tenir compte des variations pouvant exister pour chaque trou de référence entre différentes caisses de véhicule.

Toutefois, toutes ces solutions capacitaires et flexibles réclament un volume d'encombrement important, sont complexes et onéreuses. D'autre part, leur mise en oeuvre est relativement longue ce qui nuit à la productivité.

### Objet de l'invention

Le but de la présente invention est de proposer une solution de mise en géométrie qui remédie aux inconvénients listés ci-dessus.

A cet effet, l'invention porte sur un système de mise en géométrie d'un sous-ensemble mécanique pour un véhicule automobile, en particulier d'un élément de soubassement de caisse de véhicule automobile, des pièces constitutives du sous-ensemble comportant des points de référence et le système comportant des pilotes de positionnement destinés chacun à mettre en référence géométrique un point de référence correspondant, caractérisé en ce que le système comprend au moins deux dispositifs de réglage, respectivement premier et deuxième, et associés à deux pilotes de positionnement pour régler leur position, chacun des dispositifs de réglage étant configuré de sorte à déplacer sélectivement le pilote de positionnement associé dans au plus deux directions de déplacement différentes.

Au moins l'une des au plus deux directions de déplacement correspondant au premier dispositif de réglage peut être différente de chacune des au plus deux directions de déplacement correspondant au deuxième dispositif de réglage.

Chacun des dispositifs de réglage peut être configuré de sorte à déplacer sélectivement le pilote de positionnement associé dans deux directions de déplacement perpendiculaires entre elles, l'une des deux directions de déplacement correspondant au premier dispositif de réglage étant perpendiculaire aux deux directions de déplacement correspondant au deuxième dispositif de réglage.

L'une des deux directions de déplacement correspondant au premier dispositif de réglage peut coïncider avec l'une des deux directions de déplacement correspondant au deuxième dispositif de réglage.

Le système comprenant un châssis fixe, le premier dispositif de réglage peut comprendre un premier mécanisme de translation fixé sur le châssis et apte à déplacer selon une première direction un deuxième mécanisme de translation apte à déplacer selon une deuxième direction perpendiculaire à la première direction le pilote de positionnement associé.

Le deuxième dispositif de réglage peut comprendre un troisième mécanisme de translation fixé sur le châssis et apte à déplacer selon une troisième direction un quatrième mécanisme de translation apte à déplacer selon une quatrième direction le pilote de positionnement associé.

Chacun des pilotes de positionnement peut être réglable en position par un dispositif de réglage associé.

L'invention porte aussi sur une platine d'assemblage d'un sous-ensemble mécanique pour un véhicule automobile, en particulier d'un élément de soubassement de caisse de véhicule automobile, caractérisée en ce qu'elle comprend un système de mise en géométrie du sous-ensemble tel que décrit ci-dessus, pour mettre en géométrie les pièces constitutives du sous-ensemble lors de leur assemblage.

L'invention porte aussi sur un procédé de mise en géométrie d'un sous-ensemble mécanique pour un véhicule automobile, en particulier d'un élément de soubassement de caisse de véhicule automobile, procédé comprenant une étape de mise en référence géométrique de points de référence ménagés dans des pièces constitutives du sous-ensemble grâce à des pilotes de positionnement destinés chacun à mettre en référence géométrique un point de référence correspondant, procédé caractérisé en ce qu'il utilise un système de mise en géométrie tel que décrit ci-dessus de sorte à réaliser une étape préalable de réglage de la position d'au moins deux pilotes de positionnement en fonction du type de sous-ensemble à mettre en géométrie, par un déplacement sélectif de chacun des deux pilotes de positionnement dans au plus deux directions de déplacement différentes jusqu'à le placer dans une position prédéterminée, fonction du type de sous-ensemble, correspondant à la position attendue du point de référence correspondant au cours de l'étape ultérieure de mise en référence géométrique.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un système de mise en géométrie selon l'art antérieur,
- la figure 2 est une vue en perspective du principe d'un système de mise en position selon l'invention,
- la figure 3 est une vue en perspective illustrant en détail un exemple de système de mise en position selon l'invention,
- et les figures 4 et 5 sont des vues en perspective avant et arrière des premier et deuxième dispositifs de réglage utilisés sur la figure 3.

### Description de modes préférentiels de l'invention

Le système de mise en géométrie illustré sur la figure 2 permet de mettre en géométrie un sous-ensemble mécanique pour un véhicule automobile, par exemple un élément de soubassement de caisse de véhicule automobile. Plus précisément dans cet exemple particulier mais en aucun cas exclusif, il s'agit d'un élément de soubassement central constitué de trois pièces, respectivement un demi-plancher droit 16, un demi-plancher gauche 17 et un tunnel 18. Chacune de ces trois pièces comporte par exemple deux points de référence, adoptant par exemple la forme d'un trou, mais toute forme de centrage ou de positionnement adaptée peut être envisagée tel qu'un plot, un épaulement, etc... Le système comporte ainsi six pilotes de positionnement, dont seul quatre sont visibles sur la figure 2 et correspondent aux pilotes 10, 11 de la figure 1 pour le demi-plancher droit 16 et aux pilotes 12, 13 de la figure 1 pour le demi-plancher gauche 17. Les pilotes de positionnement adoptent une forme complémentaire de celle des points de référence des pièces à mettre en géométrie et sont destinés chacun à mettre en référence géométrique un point de référence correspondant.

Selon une caractéristique essentielle, le système comprend au moins un premier dispositif de réglage 20 et un deuxième dispositif de réglage 21 distincts et respectivement associés à deux des six pilotes de positionnement pour en régler la position, chacun de ces deux dispositifs de réglage 20, 21 étant configuré de sorte à déplacer sélectivement le pilote de positionnement associé dans au plus deux directions de déplacement différentes.

Dans ce qui suit, la direction X est dirigée dans la longueur de la caisse, la direction Y est dirigée dans sa largeur et la direction Z dans sa hauteur.

Plus précisément, les pilotes de positionnement 10 et 11 sont destinés à coopérer avec des points de référence du demi-plancher droit 16 globalement décalés dans la direction X, le premier dispositif de réglage 20 peut être associé au pilote de positionnement 11 arrière et le deuxième dispositif de réglage 21 au pilote de positionnement 10 avant. Le premier dispositif de réglage 20 assure une possibilité de déplacement du pilote 11 uniquement dans la direction X et/ou dans la direction Y, mais pas dans une troisième direction. Le deuxième dispositif de réglage assure une possibilité de déplacement du pilote 10 uniquement dans la direction Y et/ou dans la direction Z, mais pas dans une troisième direction. Pour une grande flexibilité du système, chacun des deux dispositifs de réglage 20, 21 est avantageusement conçu pour déplacer le pilote associé dans deux directions. Toutefois, il reste possible de prévoir que l'un des au moins deux dispositifs de réglage ne soit conçu pour déplacer le pilote associé que dans une seule direction et dans ce cas, l'autre dispositif de réglage sera prévu pour déplacer le pilote associé dans strictement deux directions.

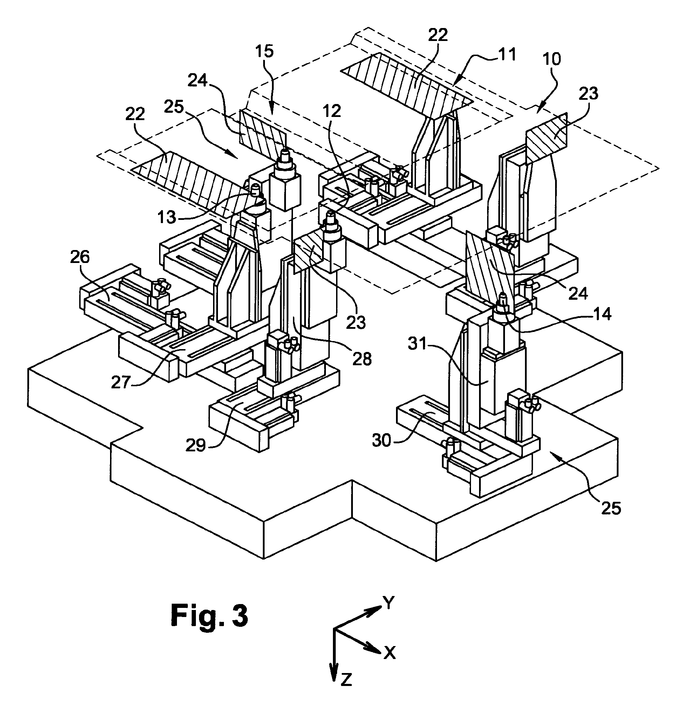

Dans l'exemple illustré sur la figure 3, chacun des pilotes de positionnement 10 à 13 est réglable en position par un premier ou un deuxième dispositif de réglage 20, 21 associé tel que défini ci-dessus. En complément, un troisième type de dispositif de réglage 25 peut être associé au pilote de positionnement 14 avant, prévu pour la mise en géométrie d'un point de référence avant du tunnel 18, pour en assurer un réglage en position par déplacement sélectif dans deux directions X et Z. Un dispositif de réglage 25 identique peut être prévu pour un réglage de la position du pilote de positionnement 15 arrière prévu pour la mise en géométrie d'un point de référence arrière du tunnel 18. Toutefois, il reste possible de prévoir, en fonction de la conception du sous-ensemble mécanique à mettre en géométrie, notamment en fonction du nombre de pièces et du nombre de points de référence, que seul deux dispositifs de réglage 20, 21, 25 ne soient utilisés dans le système, les autres points de référence éventuels n'étant alors éventuellement pas associé à un dispositif de réglage.

La figure 3 illustre que les deux dispositifs de réglage du premier type 20 associés aux pilotes 11 et 13 assurent une possibilité de déplacement du pilote dans la direction X et dans la direction Y. Cette plage bidirectionnelle de réglage en position du pilote est symbolisée par les deux rectangles 22 orientés dans les directions X, Y. Les deux dispositifs de réglage du deuxième type 21 associés aux pilotes 10 et 12 assurent une possibilité de déplacement du pilote dans la direction Y et dans la direction Z. Cette plage bidirectionnelle de réglage en position du pilote est symbolisée par les deux rectangles 23 orientés dans les directions Y, Z. Les deux dispositifs de réglage du troisième type 25 associés aux pilotes 14 et 15 assurent une possibilité de déplacement du pilote dans la direction X et dans la direction Z. Cette plage bidirectionnelle de réglage en position du pilote est symbolisée par les deux rectangles 24 orientés dans les directions X, Z.

Le premier dispositif de réglage 20 comprend un premier mécanisme de translation 26 fixé sur le châssis 19 et apte à déplacer selon une première direction, par exemple la direction X, un deuxième mécanisme de translation 27 apte à déplacer selon une deuxième direction, par exemple la direction Y perpendiculaire à la première direction, les pilotes de positionnement 11, 13 associés. Il peut être prévu une configuration inversée des premier et deuxième mécanismes de translation ainsi définis.

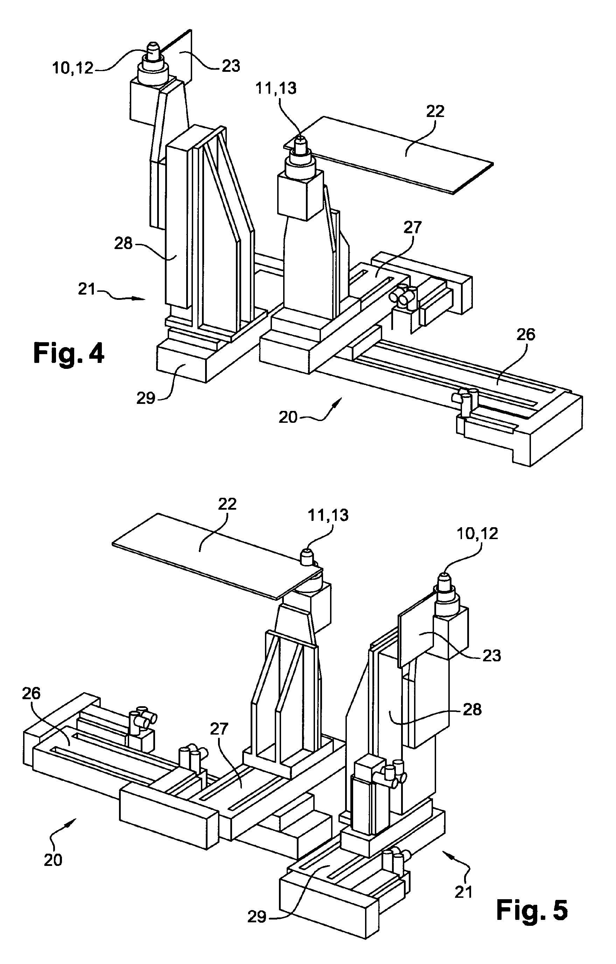

Le deuxième dispositif de réglage 21 comprend un troisième mécanisme de translation 28 fixé sur le châssis 19 et apte à déplacer selon une troisième direction, par exemple la direction Z, perpendiculaire aux première et deuxième directions, un quatrième mécanisme de translation 29 apte à déplacer selon une quatrième direction, par exemple correspondant à la deuxième direction ci-dessus définie (i.e. ici la direction Y), le pilote de positionnement 10, 12 associé. Comme l'illustrent les figures 3 à 5, il peut être prévu une configuration inversée des troisième et quatrième mécanismes ainsi définis, avec un quatrième mécanisme de translation selon la direction Y qui soit fixé sur le châssis 19, le quatrième mécanisme servant alors à déplacer par rapport au châssis 19 un troisième mécanisme de translation selon Z qui pour sa part assurerait alors le déplacement du pilote associé.

Le troisième dispositif de réglage 25 comprend un cinquième mécanisme de translation 30 fixé sur le châssis 19 et apte à déplacer selon la direction X un sixième mécanisme de translation 31 apte à déplacer selon la direction Z le pilote de positionnement 14, 15 associé. Il peut être prévu une configuration inversée des cinquième et sixième mécanismes de translation 30, 31 ainsi définis.

Il ressort de ce qui précède que quel que soit le type et le nombre de dispositifs de réglage 20, 21, 25, au moins l'une des au plus deux directions de déplacement X, Y correspondant au premier dispositif de réglage 20 est différente de chacune des au plus deux directions de déplacement Y, Z correspondant au deuxième dispositif de réglage 21. Chacun des dispositifs de réglage 20, 21 est en outre configuré de sorte à déplacer sélectivement le pilote de positionnement 10 à 13 associé dans deux directions de déplacement X, Y, Z perpendiculaires entre elles, l'une des deux directions de déplacement X, Y correspondant au premier dispositif de réglage 20 étant perpendiculaire aux deux directions de déplacement Y, Z correspondant au deuxième dispositif de réglage 21. Notamment l'une des deux directions de déplacement X, Y correspondant au premier dispositif de réglage 20 peut coïncider avec l'une Y des deux directions de déplacement Y, Z correspondant au deuxième dispositif de réglage 21.

Dans ce qui précède, les rôles tenus par les premiers, deuxièmes, et troisièmes dispositifs de réglage 20, 21, 25 peuvent être inversés les uns par rapport aux autres, notamment en ce qui concerne les directions et le nombre de déplacement offerts par chacun d'eux, en fonction des besoins liés aux pièces à mettre en géométrie. Par exemple, il est possible de ne prévoir de combiner qu'au moins un dispositif de réglage 25 selon X et/ou Z avec soit au moins un dispositif de réglage 20 selon X et/ou Y, soit au moins un dispositif de réglage 21 selon Y et/ou selon Z.

Ainsi lorsqu'une étape de mise en référence géométrique de points de référence ménagés dans des pièces constitutives du sous-ensemble grâce aux pilotes de positionnement 10 à 15 est nécessaire, le système de mise en géométrie précédemment décrit peut être utilisé de sorte à réaliser une étape préalable de réglage de la position d'au moins deux des pilotes de positionnement en fonction du type de sous-ensemble à mettre en géométrie, par un déplacement sélectif de chacun des deux pilotes de positionnement dans au plus deux directions de déplacement différentes jusqu'à le placer dans une position prédéterminée, fonction du type de sous-ensemble, correspondant à la position attendue du point de référence correspondant au cours de l'étape ultérieure de mise en référence géométrique.

Le système de mise en géométrie décrit ci-dessus peut servir à la constitution d'une platine d'assemblage d'un sous-ensemble mécanique pour un véhicule automobile, en particulier d'un élément de soubassement de caisse de véhicule automobile. La platine d'assemblage, par exemple permettant la mise en oeuvre d'opérations de soudage entre les pièces constitutives du sous-ensemble, comprend ainsi un système de mise en géométrie du sous-ensemble tel que présenté ci-dessus, pour mettre en géométrie les pièces constitutives du sous-ensemble lors de leur assemblage.

La solution de mise en géométrie décrite ci-dessus peut toutefois être utilisée quel que soit le type de sous-ensemble mécanique pour véhicule automobile et quelle que soit l'opération pour laquelle la mise en géométrie est requise. Notamment elle peut être utilisée dans toutes les applications qui demandent des mouvements d'éléments mécaniques (par exemple préhensions, palettes de géométrie, support de pièces précises etc...).

La solution de mise en géométrie décrite précédemment présente l'avantage de minimiser les volumes mécaniques nécessaires à la mise en oeuvre, permettant des accessibilités plus aisées (par exemple pour le passage de pinces à souder, ergonomie de chargement...). Elle rend possible une production continue ou « au film » avec différents types de véhicules, et donc de caisses. Elle permet l'intégration d'un nouveau véhicule sur la ligne d'assemblage dans un délai réduit. Dans le cas de platines d'assemblage, celles-ci peuvent être déplacées sans travaux importants de génie civil (fosses etc...).

## Revendications

1. Système de mise en géométrie d'un sous-ensemble mécanique pour le montage de sous-ensembles mécaniques sous la caisse d'un véhicule automobile en particulier d'un élément de soubassement de caisse de véhicule automobile, des pièces (16 à 18) constitutives du sous-ensemble comportant des points de référence et le système comportant des pilotes de positionnement (10 à 15) destinés chacun à mettre en référence géométrique un point de référence correspondant, **caractérisé en ce que** le système comprend au moins deux dispositifs de réglage (20, 21, 25), respectivement premier et deuxième, et associés à deux pilotes de positionnement pour régler leur position, chacun des dispositifs de réglage étant configuré de sorte à déplacer sélectivement le pilote de positionnement associé dans au plus deux directions de déplacement différentes.

2. Système selon la revendication 1, **caractérisé en ce qu'**au moins l'une (X) des au plus deux directions de déplacement (X, Y) correspondant au premier dispositif de réglage (20) est différente de chacune des au plus deux directions de déplacement (Y, Z) correspondant au deuxième dispositif de réglage (21).

3. Système selon la revendication 2, **caractérisé en ce que** chacun des dispositifs de réglage est configuré de sorte à déplacer sélectivement le pilote de positionnement associé dans deux directions de déplacement perpendiculaires entre elles, l'une (X) des deux directions de déplacement (X, Y) correspondant au premier dispositif de réglage (20) étant perpendiculaire aux deux directions de déplacement (Y, Z) correspondant au deuxième dispositif de réglage (21).

4. Système selon la revendication 3, **caractérisé en ce que** l'une (Y) des deux directions de déplacement (X, Y) correspondant au premier dispositif de réglage (20) coïncide avec l'une des deux directions de déplacement (Y, Z) correspondant au deuxième dispositif de réglage (21).

5. Système selon l'une des revendications 1 à 4, **caractérisé en ce que** le système comprenant un châssis fixe (19), le premier dispositif de réglage (20) comprend un premier mécanisme de translation (26) fixé sur le châssis et apte à déplacer selon une première direction (X) un deuxième mécanisme de translation (27) apte à déplacer selon une deuxième direction (Y) perpendiculaire à la première direction (X) le pilote de positionnement (11, 13) associé.

6. Système selon la revendication 5, **caractérisé en ce que** le deuxième dispositif de réglage (21) comprend un troisième mécanisme de translation (28) fixé sur le châssis et apte à déplacer selon une troisième direction (Z) un quatrième mécanisme de translation (29) apte à déplacer selon une quatrième direction (Y) le pilote de positionnement (10, 12) associé.

7. Système selon l'une des revendications 1 à 6, **caractérisé en ce que** chacun des pilotes de positionnement (10 à 15) est réglable en position par un dispositif de réglage associé.

8. Platine d'assemblage d'un sous-ensemble mécanique pour un véhicule automobile, en particulier d'un élément de soubassement de caisse de véhicule automobile, **caractérisée en ce qu'**elle comprend un système de mise en géométrie du sous-ensemble selon l'une des revendications 1 à 7, pour mettre en géométrie les pièces (16 à 18) constitutives du sous-ensemble lors de leur assemblage.

9. Procédé de mise en géométrie d'un sous-ensemble mécanique pour un véhicule automobile, en particulier d'un élément de soubassement de caisse de véhicule automobile, procédé comprenant une étape de mise en référence géométrique de points de référence ménagés dans des pièces (16 à 18) constitutives du sous-ensemble grâce à des pilotes de positionnement (10 à 15) destinés chacun à mettre en référence géométrique un point de référence correspondant, procédé **caractérisé en ce qu'**il utilise un système de mise en géométrie selon d'une revendications 1 à 7 de sorte à réaliser une étape préalable de réglage de la position d'au moins deux pilotes de positionnement en fonction du type de sous-ensemble à mettre en géométrie, par un déplacement sélectif de chacun des deux pilotes de positionnement dans au plus deux directions de déplacement différentes jusqu'à le placer dans une position prédéterminée, fonction du type de sous-ensemble, correspondant à la position attendue du point de référence correspondant au cours de l'étape ultérieure de mise en référence géométrique.

## Patentansprüche

1. System zum geometrischen Positionieren einer mechanischen Baugruppe zum Einbau mechanischer Baugruppen unter der Karosserie eines Kraftfahrzeugs, insbesondere eines Kraftfahrzeug-Wagenunterbauelements, wobei Bestandteile (16 bis 18) der Baugruppe Bezugspunkte umfassen und das System Positionierungsstifte (10 bis 15) umfasst, die jeweils dazu gedacht sind, einen entsprechenden Referenzpunkt geometrisch zu positionieren, **dadurch gekennzeichnet, dass** das System mindestens zwei, jeweils eine erste und eine zweite, Einstellvorrichtungen (20, 21, 25) umfasst, die mit zwei Positionierungsstiften verknüpft sind, um ihre Position einzustellen, wobei jede dieser Einstellvorrichtungen derart konfiguriert ist, dass sie selektiv den verknüpften Positionierungsstift in höchstens zwei verschiedenen Verlagerungsrichtungen verlagert.

2. System nach Anspruch 1, **dadurch gekennzeichnet, dass** mindestens eine (X) der höchstens zwei Verlagerungsrichtungen (X, Y), die der ersten Einstellvorrichtung (20) entsprechen, anders als jede der höchstens zwei Verlagerungsrichtungen (Y, Z), die der zweiten Einstellvorrichtung (21) entsprechen, ist.

3. System nach Anspruch 2, **dadurch gekennzeichnet, dass** jede der Einstellvorrichtungen derart konfiguriert ist, dass sie den verknüpften Positionierungsstift in zwei Verlagerungsrichtungen, die zueinander rechtwinklig sind, selektiv verlagert, wobei eine (X) der beiden Verlagerungsrichtungen (X, Y), die der ersten Einstellvorrichtung (20) entsprechen, zu den beiden Verlagerungsrichtungen (Y, Z), die der zweiten Einstellvorrichtung (21) entsprechen, rechtwinklig ist.

4. System nach Anspruch 3, **dadurch gekennzeichnet, dass** die eine (Y) der beiden Verlagerungsrichtungen (X, Y), die der ersten Regelvorrichtung (20) entsprechen, mit der einen der beiden Verlagerungsrichtungen (Y, Z), die der zweiten Einstellvorrichtung (21) entsprechen, zusammenfällt.

5. System nach einem der Ansprüche 1 bis 4, **dadurch gekennzeichnet, dass** das System ein feststehendes Fahrgestell (19) umfasst, wobei die erste Einstellvorrichtung (20) einen ersten Translationsmechanismus (26) umfasst, der an dem Fahrgestell befestigt ist und geeignet ist, um in einer ersten Richtung (X) einen zweiten Translationsmechanismus (27) zu verlagern, der geeignet ist, um in einer zweiten Richtung (Y), die zu der ersten Richtung (X) rechtwinklig ist, den verknüpften Positionierungsstift (11, 13) zu verlagern.

6. System nach Anspruch 5, **dadurch gekennzeichnet, dass** die zweite Einstellvorrichtung (21) einen dritten Translationsmechanismus (28) umfasst, der an dem Fahrgestell befestigt ist und geeignet ist, um in einer dritten Richtung (Z) einen vierten Translationsmechanismus (29) zu verlagern, der geeignet ist, um in einer vierten Richtung (Y) den verknüpften Positionierungsstift (10, 12) zu verlagern.

7. System nach einem der Ansprüche 1 bis 6, **dadurch gekennzeichnet, dass** jeder der Positionierungsstifte (10 bis 15) durch eine verknüpfte Einstellvorrichtung positionsmäßig einstellbar ist.

8. Montageplatte einer mechanischen Baugruppe für ein Kraftfahrzeug, insbesondere eines Kraftfahrzeug-Wagenunterbauelements, **dadurch gekennzeichnet, dass** sie ein System zum geometrischen Positionieren der Baugruppe nach einem der Ansprüche 1 bis 7 umfasst, um die Bestandteile (16 bis 18) der Baugruppe bei ihrer Montage geometrisch zu positionieren.

9. Verfahren zum geometrischen Positionieren einer mechanischen Baugruppe für ein Kraftfahrzeug, insbesondere eines Kraftfahrzeug-Wagenunterbauelements, wobei das Verfahren einen Schritt des geometrischen Positionierens von Referenzpunkten, die in Bestandteilen (16 bis 18) der Baugruppe eingerichtet sind, anhand von Positionierungsstiften (10 bis 15), die jeweils dazu gedacht sind, einen entsprechenden Referenzpunkt geometrisch zu positionieren, umfasst, wobei das Verfahren **dadurch gekennzeichnet ist, dass** es ein System zum geometrischen Positionieren nach einem der Ansprüche 1 bis 7 verwendet, um einen vorbereitenden Schritt zum Einstellen der Position von mindestens zwei Positionierungsstiften je nach Art der geometrisch zu positionierenden Baugruppe durch eine selektive Verlagerung jedes der beiden Positionierungsstifte in höchstens zwei verschiedenen Verlagerungsrichtungen durchzuführen, bis er je nach der Art der Baugruppe in eine vorbestimmte Position, die der erwarteten Position des entsprechenden Referenzpunktes entspricht, im Verlauf des späteren Schritts des geometrischen Positionierens gebracht wird.

## Claims

1. System of geometric positioning of a mechanical subassembly for mounting mechanical subassemblies under the shell of a motor vehicle, in particular of an underbody component of a motor vehicle shell, component parts (16 to 18) of the subassembly comprising reference points and the system comprising positioning guides (10 to 15) each intended to position geometrically a corresponding reference point, **characterized in that** the system comprises at least two adjustment devices (20, 21, 25), first and second respectively, associated with two positioning guides to adjust their position, each of the adjustment devices being configured so as to move selectively the associated positioning guide in at most two different movement directions.

2. System according to Claim 1, **characterized in that** at least one (X) of the at most two movement directions (X, Y) corresponding to the first adjustment device (20) is different from each of the at most two movement directions (Y, Z) corresponding to the second adjustment device (21).

3. System according to Claim 2, **characterized in that** each of the adjustment devices is configured so as to move selectively the associated positioning guide in two mutually perpendicular movement directions, one movement direction (X) of the two movement directions (X, Y) corresponding to the first adjustment device (20) being perpendicular to the two movement directions (Y, Z) corresponding to the second adjustment device (21).

4. System according to Claim 3, **characterized in that** one movement direction (Y) of the two movement directions (X, Y) corresponding to the first adjustment device (20) coincides with one of the two movement directions (Y, Z) corresponding to the second adjustment device (21).

5. System according to any one of Claims 1 to 4, **characterized in that** the system comprising a fixed frame (19), the first adjustment device (20) comprises a first translation mechanism (26) fixed to the frame and able to move in a first direction (X) a second translation mechanism (27) able to move the associated positioning guide (11, 13) in a second direction (Y) perpendicular to the first direction (X).

6. System according to Claim 5, **characterized in that** the second adjustment device (21) comprises a third translation mechanism (28) fixed to the frame and able to move in a third direction (Z) a fourth translation mechanism (29) able to move the associated positioning guide (10, 12) in a fourth direction (Y).

7. System according to any one of Claims 1 to 6, **characterized in that** each of the positioning guides (10 to 15) is adjustable in position by an associated adjustment device.

8. Assembly plate for a mechanical subassembly for a motor vehicle, in particular an underbody component of a motor vehicle shell, **characterized in that** it comprises a system for geometric positioning of the subassembly according to one of Claims 1 to 7 for geometric positioning of the component parts (16 to 18) of the subassembly during their assembly.

9. Method of geometric positioning of a mechanical subassembly for a motor vehicle, in particular an underbody component of a motor vehicle shell, comprising a step of geometric positioning of reference points provided in component parts (16 to 18) of the subassembly by means of positioning guides (10 to 15) each intended to position geometrically a corresponding reference point, which method is **characterized in that** it employs a system of geometric positioning according to one of Claims 1 to 7 so as to carry out a preliminary step of adjustment of the position of at least two positioning guides as a function of the type of subassembly to be geometrically positioned by selective movement of each of the two positioning guides in at most two different movement directions until it is placed in a predetermined position as a function of the type of subassembly, corresponding to the expected position of the corresponding reference point during the later geometric positioning step.
